Europäisches Patentamt

European Patent Office

Office européen des brevets

(11) Veröffentlichungsnummer: **0 254 098 B1**

# EUROPÄISCHE PATENTSCHRIFT

(45) Veröffentlichungstag der Patentschrift: **23.10.91**

(51) Int. Cl.⁵: **H02J 3/14**

(21) Anmeldenummer: **87109549.3**

(22) Anmeldetag: **02.07.87**

(54) **Verfahren zum Regeln des Energiebezugs eines mehrere Verbraucher enthaltenden Abnehmers.**

(30) Priorität: **11.07.86 DE 3623478**

(43) Veröffentlichungstag der Anmeldung:
**27.01.88 Patentblatt 88/04**

(45) Bekanntmachung des Hinweises auf die
Patenterteilung:
**23.10.91 Patentblatt 91/43**

(84) Benannte Vertragsstaaten:
**AT BE DE FR GB NL SE**

(56) Entgegenhaltungen:
**WO-A-85/01851**
**FR-A- 2 365 230**
**US-A- 4 059 747**

**IEEE TRANSACTIONS ON POWER APPARA-
TUS AND SYSTEMS, Band PAS-104, Nr. 2,
Februar 1985, Seiten 373-380, IEEE, New
York, US; M.D. NELSON: "Load management
from a power system operator's perspective"**

(73) Patentinhaber: **SIEMENS AKTIENGESELL-
SCHAFT**
**Wittelsbacherplatz 2**
**W-8000 München 2(DE)**

(72) Erfinder: **Lausterer, Gerhard, Dr.Dipl.-Ing.**
**Guttenbergstrasse 19**
**W-6744 Kandel(DE)**

## Beschreibung

Die Erfindung betrifft ein Verfahren zum Regeln des Energiebezugs eines mehrere Verbraucher und gegebenenfalls einen oder mehrere Energieerzeuger enthaltenden Abnehmers gemäß dem Oberbegriff des Anspruchs 1. Derartige Verfahren sind aus der Zeitschrift "Siemens-Energietechnik" 1 (1979), Heft 9, Seiten 348 bis 352 bekannt. Sie dienen dazu, den mit dem Energieversorgungsunternehmen vereinbarten Energiebezug optimal zu nutzen, indem die mittlere Leistung während einer Bezugsperiode bzw. die während dieser Periode dem Netz des Energieversorgungsunternehmens entnommene Energie durch Zu- oder Abschalten von Verbrauchern oder durch Vermindern oder Erhöhen der Eigenenergieerzeugung auf einen vorgegebenen Wert zu begrenzen. Das Überschreiten dieses mittleren Wertes erhöht die Energiekosten, ein Unterschreiten ist unwirtschaftlich. Man wählt für die Lastregelung möglichst solche Verbräuche aus, deren Abschalten den Betriebs- und Produktionsablauf wenig beeinträchtigt.

Die Anzahl der Schaltungen und die betragsmäßige Größe der Laständerungen sollen möglichst klein gehalten werden. Die bekannten Verfahren zeigen zwar Ansätze zur Lösung dieser Probleme, dennoch können sie zu unnötig frühen oder aber zu verspäteten und damit zu betragsmäßig zu großen Abschaltungen führen.

In der US-PS 4 059 747 ist ein Verfahren beschrieben, mit dem mehrere Verbraucher so gesteuert werden, daß ihr Energiebezug innerhalb einer Bezugsperiode in vorgegebenen Grenzen bleibt. Hierzu werden aufgrund der momentanen Leistungsaufnahme und der in der jeweiligen Bezugsperiode bisher verbrauchten Energie periodisch Vorhersagen über den Energieverbrauch am Ende der Bezugsperiode gemacht. Je nach Größe des Vorhersagewertes werden Verbraucher zu- oder abgeschaltet.

Der vorliegenden Erfindung liegt die Aufgabe zugrunde, das Verfahren gemäß dem Oberbegriff des Anspruchs 1 dahingehend zu verbessern, daß das Abschalten von Verbrauchern auf ein Minimum beschränkt ist und eine Überschreitung eines vorgegebenen maximalen Energiebezugs je Bezugsperiode sicher vermieden ist.

Erfindungsgemäß wird diese Aufgabe mit den im kennzeichnenden Teil des Anspruchs 1 angegebenen Maßnahmen gelöst.

Anhand der Zeichnung werden im folgenden ein Ausführungsbeispiel der Erfindung sowie Vorteile und Ausgestaltungen näher beschrieben und erläutert.

In dem als Beispiel dargestellten Energie-/Zeitdiagramm ist mit $E_B$ die während einer Bezugsperiode der Dauer T aus einem Netz bezogene Energie eingetragen. Die Dauer T einer Bezugsperiode beträgt häufig 15 Min. Mit dem Betreiber des Netzes ist ein Leistungtarif vereinbart, der den Preis für die Energie bestimmt, die bei Einhalten einer vereinbarten Leistungsgrenze innerhalb eines längeren Abrechnungszeitraumes, z. B. ein Jahr, bezogen wurde. Bei Überschreiten der Leistungsgrenze wird der Preis erheblich angehoben. Die Leistungsgrenze ist dabei ein während der Bezugsperioden bezogener Energiebetrag. Für die Berechnung des Preises für die bezogene Energie wird ein einmaliges Maximum bzw. der Mittelwert der drei höchsten Überschreitungen der Leistungsgrenze innerhalb des Abrechnungszeitraumes zugrunde gelegt. Um die Energiekosten niedrig zu halten, ist man daher bestrebt, eine möglichst niedrige Leistungsgrenze zu vereinbaren, diese aber dann einerseits voll auszunutzen, andererseits aber keinesfalls zu überschreiten. Die Leistungsgrenze ist nicht konstant, häufig gelten je nach Tages- und Jahreszeit, Arbeits-, Sonn- und Feiertagen unterschiedliche Grenzen, die mit derselben Regeleinrichtung eingehalten werden müssen.

Zur Regelung der Leistung werden Verbraucher zu- oder abgeschaltet. Beim Abschalten muß berücksichtigt werden, daß ein Teil der Verbraucher, z. B. die Beleuchtung von Arbeitsstätten, nicht abgeschaltet werden darf, also eine minimale Last immer bestehen bleibt, daß aber auf andere Verbraucher, wie Lüfter oder auch Maschinen, vorübergehend verzichtet werden kann. Zur Lastregelung werden, falls vorhanden, auch eigene Energieerzeuger herangezogen, z. B. Industriekraftwerke, die Prozeßwärme erzeugen und in denen elektrische Energie gewissermaßen ein Nebenprodukt ist. Der selbsterzeugte Strom ist zwar sehr kostengünstig, allerdings ist die Erzeugung eng mit der Dampferzeugung gekoppelt. Wird weniger Dampf benötigt, sinkt auch die kostengünstig erzeugbare Menge elektrischer Energie.

Die mit der Kurve $E_B$ veranschaulichte, während einer Bezugsperiode aus dem Netz bezogene Energie wird somit durch Zu- und Abschalten von Verbrauchern sowie durch Erhöhen oder Erniedrigen der Eigenerzeugung von Energie so geregelt, daß am Ende der Bezugsperiode die bezogene Energie $E_B$ möglichst nahe dem vereinbarten, maximal zulässigen Wert $E_Z$ ist, diesen Wert aber keinesfalls überschreitet. Dabei sollen möglichst wenig Schaltvorgänge erforderlich sein. Um dies zu erreichen, wird während jeder Bezugsperiode der bis zum Ende dieser Periode zu erwartende Energieverbrauch $E_V$ (Vorhersagewert) ermittelt und mit einem oberen Grenzwert $E_{VO}$ verglichen, bei dessen Überschreiten Verbraucher abgeschaltet und/oder die eigene Energieerzeugung erhöht wird. Für die Ermittlung der Vorhersagewerte wird in erster Linie die bisher bezogene Energie $E_B$, die jeweils bezogene Leistung und der angeforderte Leistungsbedarf berücksichtigt. Hierzu können bekannte Verfahren der Mittelwertberechnung, wie gleitender Mittelwert, exponentiell geglätteter Mittelwert, Streuung usw., angewandt werden. Ergänzend können statistische Kennwerte, die aus dem Verlauf der bezogenen Leistung, auch aus früheren vergleichbaren Perioden, gewonnen werden, herangezogen werden.

Charakteristisch für die oberen Grenzwerte $E_{VO}$ ist die Abnahme mit der Zeit. Ein solcher zeitlicher Verlauf ist aufgrund der Erkenntnis gewählt, daß zu Beginn der Bezugsperioden die Vorhersagewerte $E_V$ größere Schwankungen aufweisen, die im weiteren Verlauf der Bezugsperioden immer kleiner werden und sich schließlich dem tatsächlichen Bezug annähern. Zweckmäßig wird der Verlauf der oberen Grenzwerte $E_{VO}$ empirisch gefunden, z. B. aus statistischen oder Erfahrungswerten, mit denen eine besonders geringe Anzahl von Schaltvorgängen erzielt wurde. Je nach Tages- oder Jahreszeit, Betriebszustand der Anlage usf. kann oder muß der Verlauf anders gewählt werden, auf jeden Fall dann, wenn sich die Leistungsgrenze ändert. Der Verlauf der oberen Grenzwerte $E_{VO}$ kann selbstverständlich auch nichtlinear abnehmend sein.

Der erfindungsgemäß gewählte Verlauf des oberen Grenzwertes $E_{VO}$ hat zwar den Vorteil, daß die Anzahl der Abschaltungen gering gehalten wird, kann aber zur Folge haben, daß, wenn die Vorhersagewerte $E_V$ stets nur wenig kleiner sind als die oberen Grenzwerte, die in der Bezugsperiode bezogene Energie die Leistungsgrenze überschreitet. Um dies zu vermeiden, ist eine Notabschaltkurve $E_{MX}$ eingeführt, die für jeden Zeitpunkt als oberen Grenzwert für die bezogene Energie $E_B$ den Energiebetrag angibt, von dem ausgehend der maximal zulässige Energiebezug $E_Z$ erreicht wird, wenn nur noch die Verbraucher eingeschaltet sind, die zum Zwecke der Regelung des Energiebezugs nicht abgeschaltet werden dürfen. Erreicht oder überschreitet der Betrag der bezogenen Energie $E_B$ die Kurve $E_{MX}$, werden alle Verbraucher, die abgeschaltet werden dürfen, abgeworfen. Auch diese Kurve $E_{MX}$ wird sich in der Regel je nach Tages- oder Jahreszeit und dergleichen ändern. Z. B. darf während der Wintermonate in den Morgenstunden die Arbeitsplatzbeleuchtung nicht abgeschaltet werden, während sie in den Sommermonaten nicht erforderlich ist. Eine Fördereinrichtung zum Füllen eines Silos, dessen Inhalt noch für mehrere Stunden Produktion ausreicht, kann für einige Bezugsperioden abgeschaltet werden, während ein Abschalten nicht zulässig ist, wenn sein Inhalt noch während der laufenden Bezugsperiode zur Neige gehen würde. Es ist aus diesen Beispielen ersichtlich, daß die Notabschaltkurve $E_{MX}$ ständig Änderungen unterworfen ist und die abschaltbaren Verbraucher laufend vom Prozeß-und/oder Hausleitsystem dem die Regelung des Energiebezugs ausführenden Rechner übermittelt werden.

Unterschreiten die Vorhersagewerte $E_V$ einen unteren Grenzwert $E_{VU}$, werden Verbraucher zugeschaltet, damit die Leistungsgrenze ausgenutzt wird. Zunächst wird man die Verbraucher einschalten, die zuvor wegen Überschreiten des oberen Grenzwertes $E_{VO}$ ausgeschaltet wurden. Man kann dann aber auch weitere Verbraucher zuschalten, die im Augenblick noch nicht benötigt werden, z. B. die oben erwähnte Fördereinrichtung zum Füllen eines Silos, auch wenn dieses noch ausreichend ·gefüllt ist. Der Abstand der unteren Grenzwerte $E_{VU}$ von den oberen $E_{VO}$ ergibt eine Hysterese, welche die Anzahl der Schaltvorgänge gering hält. Ferner werden die unteren Grenzwerte mit der Zeit größer, so daß die am Anfang der Bezugsperioden stark pendelnden Vorhersagewerte $E_V$ keine unnötigen Einschaltvorgänge auslösen, die später wieder zurückgenommen werden müßten. Gegen Ende der Bezugsperioden, wenn die Vorhersagewerte immer sicherer werden, wird die Hysterese kleiner. Auch die unteren Grenzwerte $E_{VU}$ und damit die Hysterese können aufgrund des Energiebezugs am Anfang der Bezugsperiode oder aus statistischen Erfahrungswerten, die sich aus den angeschlossenen Verbrauchern oder sonstigen Betriebsbedingungen ergeben, ermittelt werden.

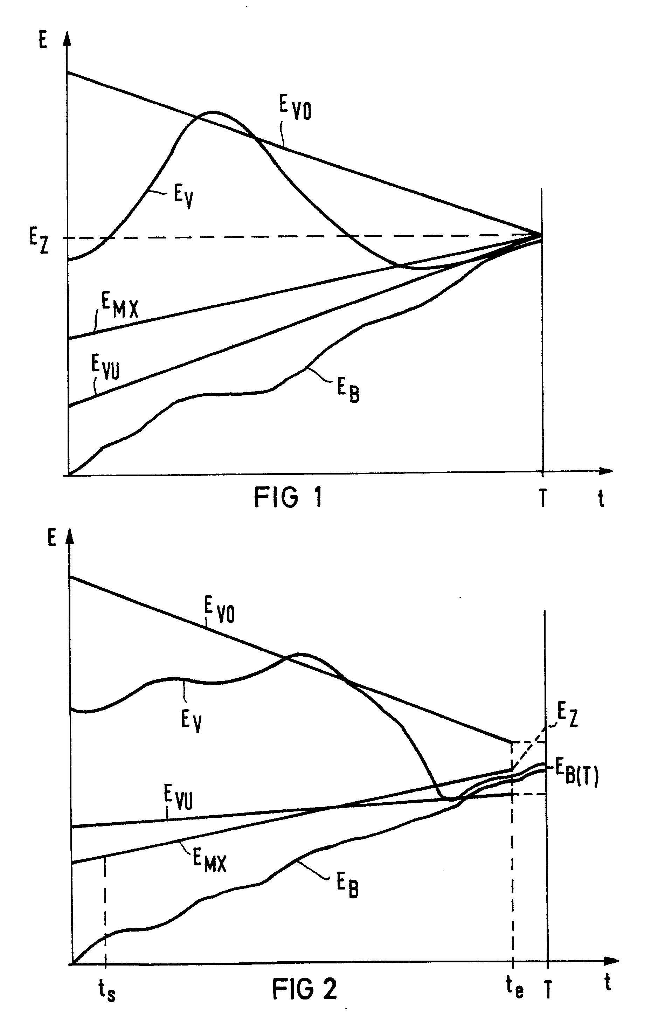

Figur 2 veranschaulicht eine Weiterbildung des neuen Verfahrens, die sicherstellt, daß auch bei besonders ungünstigen Betriebsbedingungen die Leistungsgrenze nicht erreicht wird. In Figur 2 sind zwei Zeitpunkte $t_s$, $t_e$ eingetragen, und zwar für den ersten möglichen Schaltzyklus innerhalb einer Bezugsperiode und für den letztmöglichen. In den Zeitspannen vom Beginn einer Periode bis zum Zeitpunkt $t_s$ und vom Zeitpunkt $t_e$ bis zum Ende T einer Periode sind daher keine Abschaltungen möglich, so daß dort die Grenzwerte $E_{VO}$, $E_{VU}$, die Vorhersagewerte $E_V$ und die Notabschaltkurve $E_{MX}$ keine Bedeutung mehr haben und daher gestrichelt gezeichnet sind. Der wesentliche Unterschied zu Figur 1 besteht in einem Knick der Notabschaltkurve $E_{MX}$ zum Zeitpunkt $t_e$ von dem aus für die Steigung angenommen ist, daß alle Verbraucher zugeschaltet sind. Es könnte nämlich der Fall eintreten, daß zum Zeitpunkt $t_e$ die bezogene Energie $E_B$ gleich oder nahezu gleich dem Grenzwert $E_{MX}$ für die bezogene Energie ist und daß dann, wenn keine Abschaltungen mehr möglich sind, sich zufällig alle Verbraucher zuschalten. Bei dem Verfahren nach Figur 2 bleibt auch in diesem Fall die bezogene Energie unter der maximal zulässigen Energie $E_Z$. Es ist zu berücksichtigen, daß in Figur 2 zwecks deutlicher Darstellung die Phase $t_e$ - T und damit auch die Differenz $E_Z$ - $E_B(T)$ stark vergrößert gezeichnet ist. In der Praxis spielt diese Differenz keine Rolle. Bei dem Verfahren nach Figur 1 muß, um auch in der Phase $t_e$ - T ein Überschreiten des Wertes $E_Z$ sicher zu verhindern, zumindest im Zeitpunkt $t_e$ die Differenz zwischen der bezogenen Energie $E_B$ und dem Grenzwert $E_{MX}$ gemessen und entsprechend diesem Betrag ein weiteres Zuschalten von Verbrauchern gesperrt werden.

## Patentansprüche

1. Verfahren zum Regeln des Energiebezugs eines mehrere Verbraucher und gegebenenfalls einen oder mehrere Energieerzeuger enthaltenden Abnehmers, wobei in Bezugsperioden jeweils höchstens eine maximale Energie ($E_z$) (Leistungsgrenze) bezogen wird, wobei ferner während jeder Bezugsperiode die jeweils seit Beginn der Bezugsperiode bezogene Energie ($E_B$), der bis zum Ende (T) der Bezugsperiode in dieser zu erwartende Energieverbrauch als Vorhersagewert ($E_V$), ferner die zum Erreichen der Leistungsgrenze erforderliche Last ermittelt und die Verbraucher sowie Energieerzeuger entsprechend ein- und ausgeschaltet werden, **dadurch gekennzeichnet,** daß der jeweilige Vorhersagewert ($E_V$) mit einem innerhalb der Bezugsperiode mit der Zeit abnehmenden oberen Grenzwert ($E_{VO}$) verglichen wird, bei dessen Überschreiten Verbraucher abgeschaltet werden.

2. Verfahren nach Anspruch 1, **dadurch gekennzeichnet,** daß die Vorhersagewerte ($E_V$) mit einem unteren Grenzwert ($E_{VU}$) verglichen werden, bei dessen Unterschreiten Verbraucher zugeschaltet werden oder die Eigenenergieerzeugung herabgesetzt wird.

3. Verfahren nach Anspruch 1 oder 2, **dadurch gekennzeichnet,** daß für jeden Zeitpunkt innerhalb der Bezugsperiode der maximale Energiebezug ($E_{MX}$) ermittelt wird, von dem aus bei Abschalten aller zum Zwecke der Energiebezugsregelung abschaltbaren Verbraucher die Leistungsgrenze erreicht wird, und daß während der Bezugsperioden die jeweils bezogene Energie ($E_B$) mit dem maximalen Energiebezug ($E_{MX}$) verglichen wird und bei Erreichen des maximalen Energiebezugs ($E_{MX}$) die zum Zwecke der Energiebezugsregelung abschaltbaren Verbraucher abgeschaltet werden.

4. Verfahren nach Anspruch 3, **dadurch gekennzeichnet,** daß bei Ermittlung des maximalen Energiebezuges ($E_{MX}$) angenommen ist, daß vom Zeitpunkt $t_e$ des letztmöglichen Abschaltens der Verbraucher bis zum Ende der Bezugsperiode (T) alle Verbraucher eingeschaltet sind.

## Claims

1. Process for regulating the energy demand of a user containing a plurality of consumers and possibly one or more than one energy producers, whereby in periods of demand at the most a maximum energy ($E_Z$) (capacity limit) is respectively consumed and furthermore during each period of demand the energy ($E_B$) consumed respectively since the beginning of the period of demand, the energy consumption to be expected in the period of demand up to the end (T) of this period of demand as a forecast value ($E_V$), and in addition the load necessary to achieve the capacity limit is determined and the consumers and energy producers are appropriately switched on and off, characterized in that the respective forecast value ($E_V$) is compared with an upper limit value ($E_{VO}$) decreasing with time within the period of demand, and when this value is exceeded consumers are switched off.

2. Process according to claim 1, characterised in that the forecast values ($E_V$) are compared with a lower limit value ($E_{VU}$) and when this value is not reached consumers are switched on or the intrinsic energy production is reduced.

3. Process according to claim 1 or 2, characterised in that the maximum energy demand ($E_{MX}$) is determined for each point in time within the period of demand from which, when all the consumers which can be switched off to control energy consumption are in fact switched off, the capacity limit is reached, and in that during the periods of demand the amount of energy ($E_B$) respectively consumed is compared with the maximum energy demand ($E_{MX}$) and when the maximum energy demand ($E_{MX}$) has been reached the consumers which can be switched off to control energy consumption are in fact switched off.

4. Process according to claim 3, characterised in that when determining the maximum energy demand ($E_{MX}$) it is assumed that from the moment $t_e$ of the last possible switching-off of the consumers to the end of the period of demand (T) all the consumers are switched on.

## Revendications

1. Procédé pour régler la consommation en énergie d'un usager qui comporte plusieurs appareils d'utilisation et éventuellement un ou plusieurs générateurs d'énergie, et selon lequel, pendant des périodes de consommation, au maximum une énergie maximale ($E_Z$) (limite de puissance) est consommée, et selon lequel on détermine en outre, pendant chaque période de consommation, l'énergie ($E$) consommée depuis le début de la période de consommation, la consommation en énergie à laquelle on peut s'attendre pendant la période de référence et jusqu'à la fin ($T$) de cette période en tant que valeur de prédiction ($E_V$) et en outre la charge nécessaire pour obtenir la limite de puissance, et on branche et on débranche de façon correspondante les appareils d'utilisation et les générateurs d'énergie, caractérisé par le fait que la valeur respective de prédiction ($E_V$) est comparée à une valeur limite ($E_{VO}$), qui diminue dans le temps pendant la période de consommation et lors du dépassement de laquelle des appareils d'utilisation sont débranchés.

2. Procédé suivant la revendication 1, caractérisé par le fait que les valeurs de prédiction ($E_V$) sont comparées à une valeur limite inférieure ($E_{VU}$), et que les appareils d'utilisation sont branchés ou la production d'énergie propre est réduite lorsque les valeurs de prédiction tombent audessous de cette valeur limite.

3. Procédé suivant la revendication 1 ou 2, caractérisé par le fait qu'à chaque instant pendant la période de consommation, on détermine la consommation maximale d'énergie ($E_{MX}$) à partir de laquelle on obtient la limite de puissance lors du débranchement de tous les appareils d'utilisation qui peuvent être débranchés pour réaliser la régulation de la consommationn en énergie, et que pendant les périodes de consommation, l'énergie respectivement consommée ($E_B$) est comparée à la consommation maximale d'énergie ($E_{MX}$) et que les appareils d'utilisation pouvant être débranchés pour réaliser la régulation de la consommation en énergie sont débranchés lorsque la consommation maximale d'énergie ($E_{MX}$) est atteinte.

4. Procédé suivant la revendication 3, caractérisé par le fait que lors de la détermination de la consommation maximale ($E_{MX}$), on suppose que tous les appareils d'utilisation sont branchés depuis l'instant $t_e$ du dernier débranchement possible des appareils d'utilisation jusqu'à la fin de la période de consommation ($T$).

EP 0 254 098 B1

FIG 1

FIG 2

6